# EUROPEAN PATENT SPECIFICATION

(11) **EP 1 331 711 B1**
(45) Date of publication and mention of the grant of the patent: **14.05.2008**
(21) Application number: 03003349.2
(22) Date of filing: 20.08.1991
(51) Int. Cl.: H02B 1/052

(54) **Electricity supply assembly**
Elektrische Versorgungseinheit
Ensemble d'alimentation électrique

(30) Priority: 21.08.1990 GB 9018346
(43) Date of publication of application: 30.07.2003
(62) Divisional of application: 97104775.8
(73) Proprietor: Electrium Sales Limited, Brownhills, WS8 6JZ (GB)
(72) Inventor: Bowen, Peter William, Sutton Coldfield, West Midlands B75 6BP (GB); Shotter, Darren John, Cannock, Staffordshire WS12 5UY (GB)
(74) Representative: Morgan, Marc

(56) References cited:
- EP-A- 0 229 590
- DE-A- 1 946 714
- DE-A- 2 030 449
- DE-A- 2 350 955
- GB-A- 2 036 437

## Description

This invention is concerned with improvements relating to the mounting of circuit breakers.

A conventional circuit breaker, hereinafter referred to as being of the kind specified, comprises a generally flat, parallel-sided body provided on the underside thereof with a mounting recess which in use is positioned over and engaged with a mounting rail, with a primary plane of the circuit breaker, extending parallel to the flat sides, extending at right angles to the length of the mounting rail.

A conventionally used mounting rail is termed a "din-rail", being of inverted top hat cross-section, comprising parallel upwardly-facing flanges and narrow outwardly-turned lips.

Conventionally the circuit breaker is provided on the underside thereof with an inwardly-turned lip, providing a fixed retaining formation having a re-entrant surface, an opposite side edge portion of the recess being bounded by straight edge. The circuit breaker comprises a catch assembly, resiliently urged from a retracted position to an advanced position, in which advanced position a retaining element of the catch assembly projects through said straight edges a short distance into the recess.

In use, the circuit breaker is engaged with the mounting rail, the retaining formation being engaged beneath one of the lips with the underside of the circuit breaker inclined relative to the mounting rail, and the circuit breaker moved angularly so as to cause the retaining element to engage the other lip, the profile of the retaining element causing it to be momentarily depressed against the resilient force urging it to its advanced position, as it passes behind the other lip. The circuit breaker is then clamped in conventional manner to a bus-bar, supported in parallel relationship to the mounting rail, with a primary plane of the circuit breaker extending parallel to the flat side extending at right angles to the length of the mounting rail, with the flat faces of the circuit breaker lying against the flat faces of adjacent circuit breakers.

When it is required to move one circuit breaker from an array of circuit breakers on the rail, the retaining element is manually retracted, and held retracted, and the circuit breaker is tilted within said primary plane to permit rectilinear movement of the circuit breaker relative to the rail to disengage the fixed retaining formation from the rail. This necessitates a temporary removal of the bus-bar, and this is inconvenient since it involves disruption of the connections of other circuit breakers and/or of other electrical equipment used in relation to the bus-bar.

Numerous suggestions have been made for the provision of a more convenient mounting of circuit breakers of the kind specified to the mounting rail, to enable them to be removed and replaced with minimal disruption. However heretofore all other suggestions have been unsatisfactory in one aspect or other, and/or unduly expensive.

DE-A-1946714 discloses an arrangement including encapsulated bus bars, in which circuit breakers are clamped to a DIN mounting rail. Plug bushes for pluggable connectors project beyond the base area of the circuit breakers, and connection to the circuit breakers is effected by pluggable connecting pieces which are inserted into the plug bushes and connected to the circuit breakers. This is inconvenient, like the arrangements explained above.

According to this invention there is provided an electricity supply assembly comprising a housing assembly; an elongate electricity supply member located in a housing part of the assembly, the housing part being provided with one or more openings providing access to the supply member; an elongate mounting rail having a base, parallel upwardly facing flanges, a first outwardly-projecting lip on a side of the mounting rail closest to the supply member and a second outwardly-projecting lip on a side of the mounting rail furthest from the supply member, against which lips a circuit breaker may be located; a circuit breaker with parallel side walls and provided in an underside thereof with a recess which can be located over the lips of the mounting rail, the circuit breaker comprising a fixed formation extending from a wall of the circuit breaker into the recess on one side thereof, and a retractable formation projecting into the recess from the other side thereof; characterised in that the circuit breaker is provided with a contact member projecting from said underside at a position spaced to one side of the recess on the side thereof on which the retractable formation is provided, the arrangement being such that mounting the circuit breaker on the mounting rail and rotation of the circuit breaker to bring the recess over the mounting rail, by engagement of the fixed formation beneath the second lip of the mounting rail the retractable formation being cammed momentarily into a retracted position as it passes beneath the first lip of the mounting rail, causes the contact member to pass into conductive engagement with the supply member.

Electrical components other than circuit breakers, including main switches, transformers, RCDs, which need the supply of electric current from the supply member, may of course be mounted on the mounting rail in the same manner as the circuit breakers, being connected to the supply member in a similar manner.

The circuit breaker may comprise a formation on the same side thereof as the contact member, which is spring urged to engage beneath the mounting rail, such formation conveniently retracting automatically on movement of the circuit breaker against the mounting rail, allowing the circuit breaker to be "clicked" in position.

Preferably the contact member of the circuit breaker comprises a flat contact surface lying in a plane which extends at right angles to a primary plane of the circuit breaker, and which engages face-to-face with the supply assembly.

Preferably the contact member extends beyond said plane of the mounting recess, for engagement with the supply member. Preferably the contact member comprises a flat contact surface lying in a plane which extends at right angles to the primary plane of the circuit breaker, and which may thus engage face-to-face with the bus-bar.

Alternatively the contact member may be a separate member, conveniently L-shaped, separately mounted on the circuit breaker and located in an aperture of the circuit breaker conventionally provided for direct engagement with the bus-bar, said separate member being electrically connected to the circuit breaker by the screw means provided for electrically connecting the circuit breaker to the bus-bar.

The contact member may be substantially enclosed by an insulating sheath, comprising an exposed, terminal portion for conductive engagement with the bus-bar, and conveniently with an exposed engagement portion for connection with contact means of the circuit breaker itself.

The supply assembly may comprise an elongate, insulated housing within which the bus-bar is located, apertures being provided at spaced intervals in the housing for reception of the contact members of a plurality of such circuit breakers or other electrical equipment, to shield the bus-bar to provide for added safety, particularly where the aperture is sufficiently small to prevent finger entry, as provided for by BS 3042 - Standard Test Fingers and Probe.

Additionally the length of the terminal portion may in relation to the size of the bus-bar and the depth of the housing be such as to ensure that, as the terminal portion is withdrawn from the aperture, and becomes to be touched, it moves out of contact with the bus-bar.

Preferably the housing comprises a plurality of spring clips at spaced locations such that at least one spring clip is available to engage the contact member as it is moved towards the bus-bar. Where spaced apertures are provided for reception of the contact members, conveniently a spring clip is located in relation to each such aperture.

Preferably each spring clip is provided with an entrant portion which is open for reception of the contact member between said entrant portion and the bus-bar, to enable the spring clip to be opened in consequence of the insertion of the contact member into position.

Preferably the combination set out in the last preceding paragraph also comprises a supporting assembly comprising two end housings each comprising an engagement surface, against which the underside of a mounting rail may be engaged, and spaced arms extending from said engagement surface, at least one of said arms comprising location means to enable one of the outwardly-turned lips of the mounting rail to be engaged therein, and at least one of the arms being resilient to allow the mounting rail to be snap-fitted into position against said engagement surface and between said arms.

In this manner, by mounting a mounting rail on two such housings, one at each of the end regions of the mounting rail, and free-standing assembly may be provided, comprising a mounting rail upon which, between the end housings, circuit breakers may be mounted.

Preferably the engagement surfaces of the housings are provided with formations (such as male and/or female formations) which may be engaged with complementary formations on the underside of the mounting rail, to provide stability.

Preferably the housings are provided with means for supporting the supply assembly in parallel relationship with the mounting rail. Thus, where the supply assembly comprises an elongate housing, a bus-bar located in and extending lengthwise of the housing, one or more opening being provided in the housing to enable the contact members of the circuit breakers to be engaged with the bus-bar, and spring means to urge such contact members into engagement with the bus-bar, preferably the elongate housing is provided with supporting members to support the ends of the bus-bar, the end housings being cooperable with the supporting members whereby the bus-bar may be secured stably to, extend between, the end housing.

Preferably such cooperation is effected by the provision of snap-fitting means of the end housings, into which parts of the supporting members may be secured, although this may if desired be reversed.

Preferably the combination set out in the last preceding paragraph comprises a supply switch, which may be mounted on the mounting rail in the same manner as has been described in relation to the circuit breakers, and which comprises a contact member for engagement with the bus-bar, the supply switch being adapted to supply electric current to the bus-bar.

According to this invention there is also provided a supply assembly for a plurality of circuit breakers of the kind specified, said assembly comprising an elongate insulated housing, an elongate bus-bar within the housing, the bus-bar providing a surface against which a contact member may be engaged, at least one opening in the housing for passage of the contact member of circuit breakers into the housing for engagement with the bus-bar, and means to urge such contact members into face-to-face contact with the bus-bar.

Preferably the housing is provided with a plurality of openings, each capable of receiving the contact member of a circuit breaker or other items of electrical installation equipment and preferably said means to urge the contact members into face-to-face contact with the bus-bar is provided by spring clips.

According to this invention there is also provided a supporting assembly for a mounting rail comprising a base, parallel upwardly-facing flanges, and narrow outwardly-turned lips, the supporting assembly comprising two end housings each comprising a engagement surface, against which the underside of the base of the mounting rail may be engaged, and spaced arms extending from said engagement surface, at least one of said arms comprising location means to enable one of the outwardly-turned lips to be engaged therewith, and at least one of the arms being resilient to enable the mounting rail to be snap-fitted into position against said engagement surface and between said arms.

In this manner, by mounting a mounting rail on two such housings, one at each of the end regions of the mounting rail, a free-standing assembly may be provided, comprising a mounting rail upon which, between the end housings, circuit breakers may be mounted.

Preferably the engagement surfaces of the housings are provided with formations (such as male and/or female formations) which may be engaged with complementary female and/or male formations of the base of the mounting rail, to improve stability.

Preferably the end housings are provided with means to enable them to be secured to a supporting surface, such as apertures whereby the housings may be screwed to a supporting surface. If desired the mounting rail may be provided with apertures whereby such screws pass through both the mounting rail and the end housing subsequent to the assembly of the mounting rail on the end housings.

Preferably the housings are provided with means for supporting a supply assembly, comprising a bus-bar, in parallel relationship to the mounting rail, preferably in a manner in which stability of the assembly is improved.

Thus preferably the supply assembly comprises a bus-bar, provided with means whereby circuit breakers may be electrically connected therewith, and supporting members on the bus-bar, conveniently at the end portions thereof, the end housing being cooperative with the supporting members whereby the bus-bar may be secured stably to, to extend between, the end housings.

Preferably such cooperation is effected by the position of snap-fitting means on the end housing, into which parts of the supporting member may be secured, although if desired this may be reversed.

There will now be given a detailed description, to be read with reference to the accompanying drawings, of preferred embodiments of this invention, which have been selected for the purposes of illustrating the invention by way of example.

In the accompanying drawings:

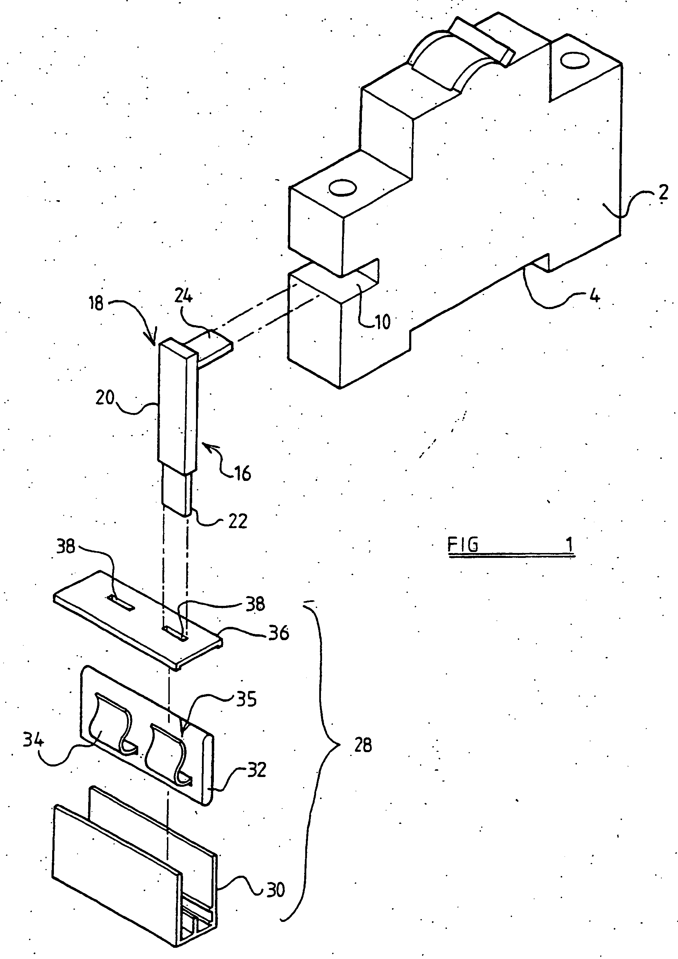

FIGURE 1 is an exploded view of an assembly of circuit breaker, and supply assembly in accordance with a first embodiment of the invention;
FIGURE 2 is a schematic sectional view showing the circuit breaker mounted on a mounting rail, and connected with the supply assembly; and
FIGURE 3 is a schematic sectional view of an alternative construction of a circuit breaker and supply assembly in accordance with a second embodiment of the invention;
FIGURES 4a, 4b and 4c are outline views showing the circuit breaker of the second embodiment in different orientations;
FIGURE 5 is a perspective view of a supporting assembly of the second embodiment;
FIGURES 6a and 6b are end elevations of said supporting assembly, illustrating a movement into operative positions thereon of a mounting rail;
FIGURE 7 is an exploded perspective view of a supply assembly of the second embodiment; and
FIGURE 8 is a schematic view showing the mounting of the circuit breaker on the mounting rail of the second embodiment, and engaging with the supply assembly.

The circuit breaker of the first embodiment is generally conventional, comprising a housing 2 having generally flat, parallel side faces and provided on the underside thereof with a mounting recess 4, for mounting on a mounting rail 6 of conventional "top hat" section, and of the kind conventionally referred to as "din rail", the rail comprising a base 7, spaced, parallel flanges 8 extending from the base, and parallel outwardly extending flanges 9a and 9b which together provides a support surface which may be engaged by an underside of the recess 4.

In use, a plurality of circuit breakers are mounted on the mounting rail 6 with the side faces thereof in generally abutting relationship, with a primary plane of each circuit breaker, extending parallel to the flat sides thereof, extending at right angles to the length of the mounting rail.

The housing is provided on one side thereof with an aperture 11, which together with a connecting screw 12, provides means by which the circuit breaker may be secured to a conventional bus-bar, the bus-bar in use extending into the aperture 10 and being held in position by the screw 12. However in accordance with this invention the circuit breaker is provided with a contact assembly 16, comprising a generally L-shaped contact member 18 over the majority of the length of which is provided an insulating sheath or sleeve 20, leaving a residual, uninsulated terminal portion 22 and a contact portion 24, constituting the shorter limb of the assembly 16.

The contact member extends downwardly from the circuit breaker in a direction extending at right angles to the primary plane of the circuit breaker, and at right angles towards the plane of engagement between the recess 4 of the circuit breaker and the flanges 9, 9 of the mounting rail, with the terminal portion, preferably in the form of a flat blade, projecting beyond said plane of engagement.

The circuit breaker of the first embodiment for use with a supply assembly 28 comprising an elongate housing 30 within which an elongate bus-bar 32 is located, the bus-bar being provided at spaced intervals with spring clips 34, each spring clip being provided at an upper end portion thereof with an outwardly-flared entrant portion 35. The bus-bar is located within the housing, which comprises a cover 36, provided at spaced intervals, corresponding to the spacing between the spring clips 34, with apertures 38.

The bus-bar 32 is preferably provided with a flat contact face 33, extending in the longitudinal direction parallel to the length of the mounting rail 6, and at right angles to the primary planes of the circuit breakers when mounted thereon, to be engaged by the flat face of the terminal portion 22 of each contact member 18.

In the practice of the present invention, the contact assembly 16 is secured to the body of the circuit breaker 2, the contact portion 24 being located in the aperture 10 and being secured therein by means of the screw 12, with the terminal portion 22 projecting in a direction generally at right angles to the underside of the aperture 4, and beyond the plane of said underside. The circuit breaker is moved towards the mounting rail 6, with said underside 5 engaging the surfaces 8 provided by the out-turned flanges and the terminal portion 18 passes through one of the apertures 38, engages the opening portion 35 of the spring clip 34 as it moves into contact with the bus-bar 32, the spring clip thereafter retaining the terminal portion 18 in face-to-face contact with the bus-bar.

By this means the circuit breaker may be removed from the mounting rail and supply assembly 30 by simple linear movement in the direction of the arrow A, minimising disruption of the bus-bar and other components which may be mounted on the bus-bar.

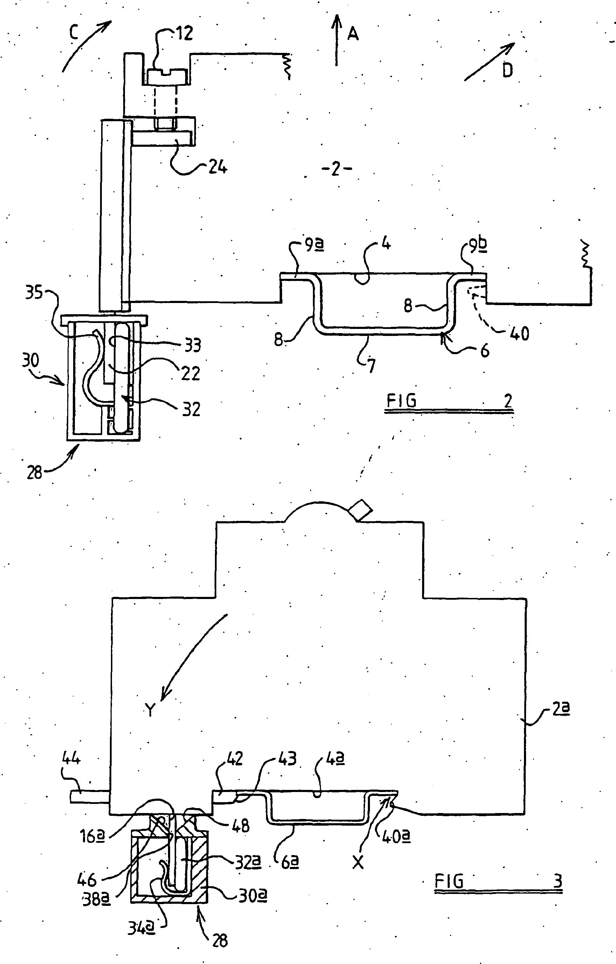

However if greater stability is required, a projection may be provided on the right hand side of the housing, as shown in dotted lines and indicated by the numeral 40 in Figure 2, which is engageable beneath the right hand flange 8, to provide greater stability. In such circumstances the circuit breaker may be removed from the mounting rail and bus-bar assembly initially by rotational motion in a clockwise direction, [as indicated by the arrow C] until the terminal portion 22 passes from the aperture 38 of the housing, subsequent to which translational movement in the general direction D may be effected to complete removal of the circuit breaker from the din-rail.

In the second embodiment, in which similar numerals increased by 100 have been used to denote parts similar to those of the first embodiment, the contact element 116 is electrically connected to the circuit breaker internally thereof, comprising a terminal portion 118 which projects from the underside of the circuit breaker.

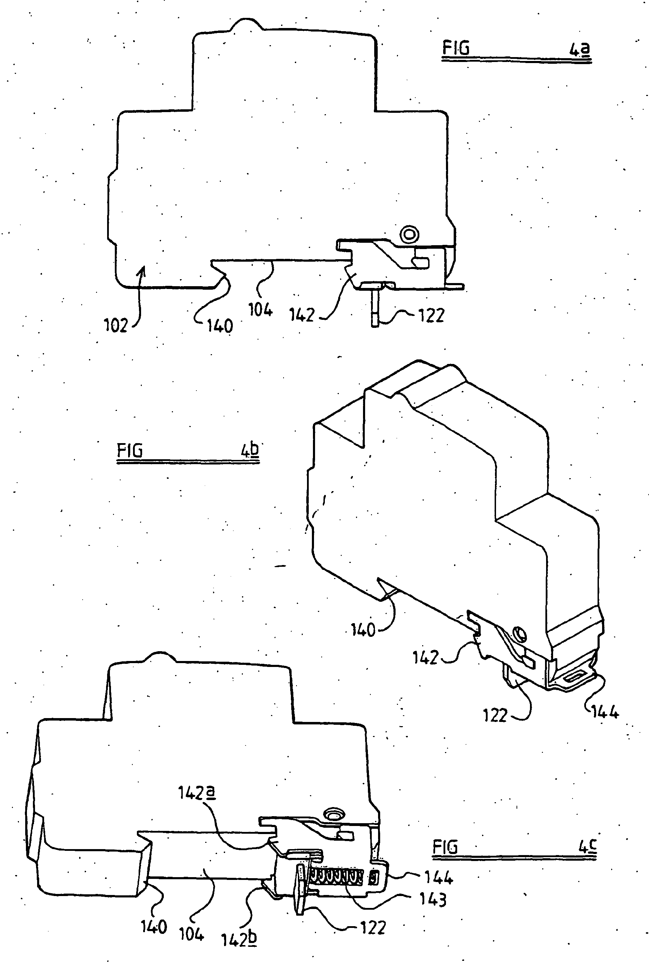

Further, in addition to having a fixed projection 140, the circuit breaker is provided with a retractable projection 142 extending into the recess 104 from the opposite side, said projection 142 being urged by a spring 143 to its advanced position, and being retractable by engagement of a tail 144, by a tool such as a screw driver. Preferably, as is shown in Figure 4c, the projection 142 is provided by spaced flanges, each having a nose portion 142a, 142b respectively, serving together as the retractable projection. In this manner, the terminal portion 122 may be arranged so as to project between said flanges 142a, 142b without contact.

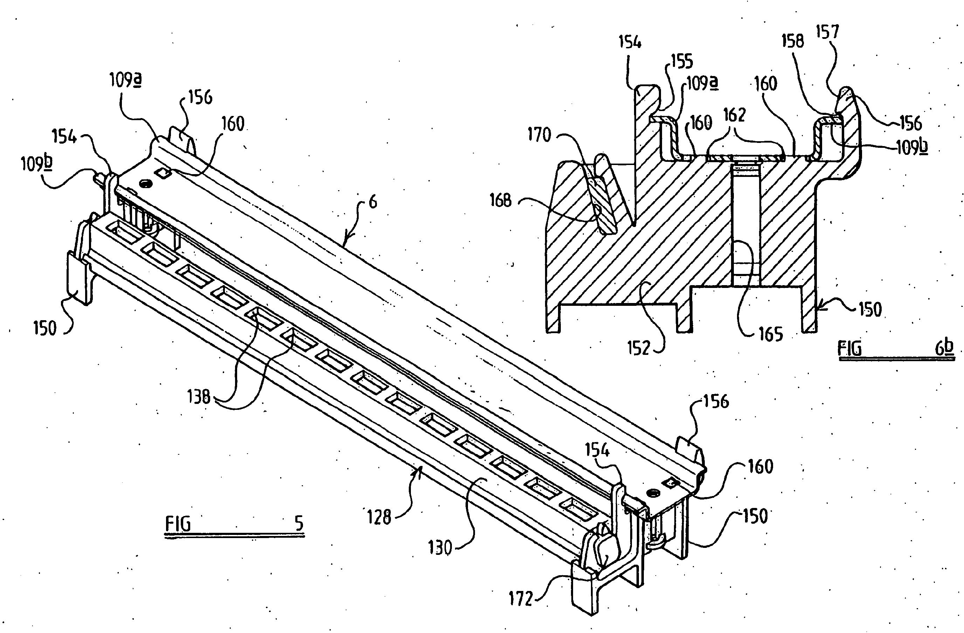

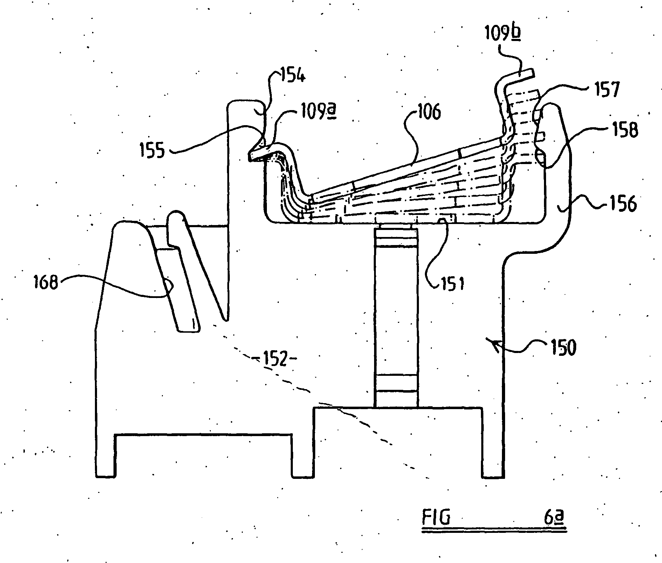

The second embodiment utilises a supporting assembly, shown in Figures 5 and 6, comprising two end housings 150, each comprising a body 152, and parallel arms 154 and 156 extending upwardly therefrom. The arm 154 is provided with a notch 155, whilst the arm 156 is provided with a cam face 157, extending to a re-entrant section 158.

One flange 109a of the mounting rail 106 may be engaged in the notch 155, and the opposite flange 109b pressed against the arm 156, engaging the cam face 157 and causing the arm 156 to flex outwardly, allowing the flange 109 to pass beneath the re-entrant face 158, with the base 107 of the flange resting against a flat upper surface 15 of the body 152.

As shown in Figure 5, extending upwardly from said flat surface of the body are projections 160, conveniently of rectangular cross-section, adapted to locate in complementary apertures 162 in the base 7 of the mounting rail.

Additionally the body 152 is provided means, conveniently in the form of an aperture 165, to enable a securing element such as a screw to be passed through a hole 166 in the mounting rail for further securement, such as to a mounting surface.

In this manner the mounting rail 106 may readily be secured in a desired position, for the reception of circuit breakers and ancillary equipment.

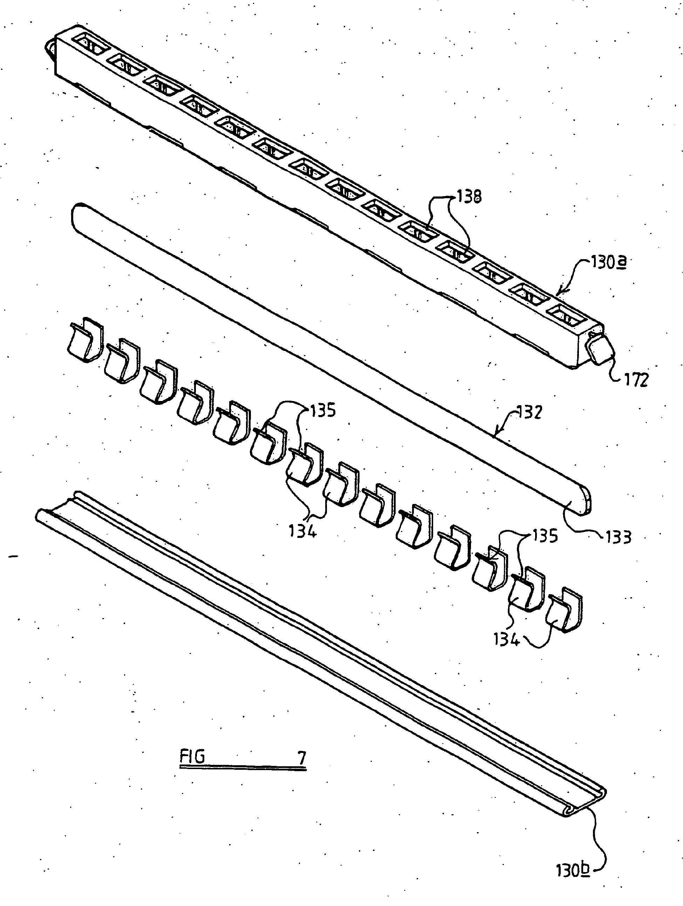

The supporting assembly also provides a support for the supply assembly 128, said supply assembly being shown in exploded form in Figure 7 and comprising an elongate housing 130 comprising an up housing part 130a, and a lower housing part 130b adapted to be snap-fitted together, an elongate supply member in the form of a bus-bar 132 located in the housing, and a plurality of spring clips 144 of generally U-shape embracing the bus-bar. The bus-bar is provided with generally parallel side faces, and each spring clip 134 is provided with an outwardly-flared terminal portion 135 for the reception of a contact element, as will be described hereinafter.

Each housing is provided with a slot 168, within which a location member 170 of an end cap 172 of the housing 130 may be engaged, firmly to secure the supply assembly to the end housing 150.

In this manner a sub-assembly comprising a mounting rail 106 and supply member 132 may be presented ready for installation, which may be accomplished simply by securing the sub-assembly by the use of screws to a supporting surface, ready for the reception of circuit breakers and ancillary equipment, including equipment to supply power to the bus-bar.

The housing 130 of the supply assembly is provided with upwardly-facing apertures 138 of a spacing equal to the width of a conventional circuit breaker, in turn being equal to the spacing of the spring clips 134 on the bus-bar 132.

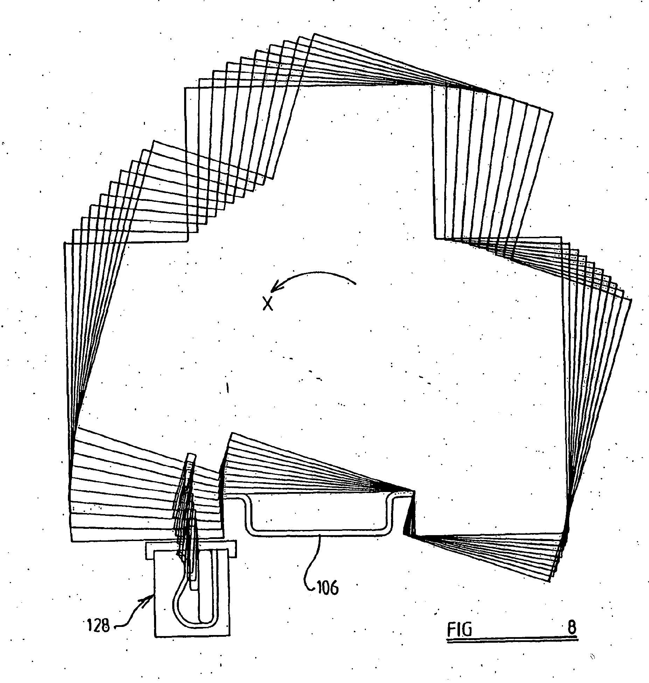

In the use of the sub-assembly, the fixed projection 140 of a circuit breaker is engaged with the flange 109b of the mounting rail, and the circuit breaker is rotated in the direction of the arrow (Figure 8) until the retractable projection 142 engages against the flange 109a, causing the projection 142 to be withdraw against the action of the spring 143 until said projection passes behind the flange 109a.

As this occurs, the contact portion 122 passes through one of the apertures 138, and engages the outwardly-flared margin 135 of an associated spring clip 134, the contact portion passing into engagement with the bus-bar 132 and being held there against by said spring clip, with the generally flat faces of the contact portion and bus-bar engaging to provide good electrical contact.

On the removal of the circuit breaker from the assembly, the tail 144 may be retracted by the use of tool such as a screw driver to allow the circuit breaker to be rotated in a direction opposite to the direction, withdrawing the contact portion 122 from the supply assembly, and this may be accomplished with no danger of inadvertently touching electrically live parts of the system.

It will be appreciated that whilst the invention has been described above in relation to the mounting of circuit breakers on mounting rails into electrical contact with a bus-bar, in general it will be desirable to use the same construction in relation to the mounting of other items of electrical equipment including main switches, transformers, RCDs, etc. Thus, where these need to be connected to the bus-bar, they will be provided with contact members similar to the contact members 22 of the circuit breakers above described, enabling them to be mounted on the mounting rail 6, and brought into contact with the bus-bar 32 as hereinbefore described.

Moreover, by virtue of the supply assembly being located to one side, and below the mounting rail 6 (as shown in Figures 2 and 3) other electrical components, which may include time switches, time clocks, transformers and the like, but which do not need to be connected to the bus-bar, may be mounted on the mounting rail 6 in a conventional manner, without any interference from the supply assembly. Such ancillary equipment may conveniently enter into engagement with the upper surface of the housing 130a, as would be the case if a conventional circuit breaker, not having a downwardly-extending contact member 22, were mounted on the mounting rail.

In the present specification "comprises" means "includes or consists of" and "comprising" means "including or consisting of".

Modifications are possible within the scope of the appended claims.

## Claims

1. An electricity supply assembly comprising:
a) a housing assembly (130, 150);
b) an elongate electricity supply member (132) located in a housing part (130) of the assembly, the housing part being provided with one or more openings providing access to the supply member;
c) an elongate mounting rail (6, 106) having a base (7), parallel upwardly facing flanges (8), a first outwardly-projecting lip (109a) on a side of the mounting rail closest to the supply member and a second outwardly-projecting lip (109b) on a side of the mounting rail furthest from the supply member, against which lips a circuit breaker may be located;
d) a circuit breaker (102) with parallel side walls and provided in an underside thereof with a recess (104) which can be located over the lips (109a, 109b) of the mounting rail, the circuit breaker comprising a fixed formation (140) extending from a wall of the circuit breaker into the recess (104) on one side thereof, and a retractable formation (142) projecting into the recess (104) from the other side thereof;
**characterised in that**
the circuit breaker is provided with a contact member (122) projecting from said underside at a position spaced to one side of the recess (104) on the side thereof on which the retractable formation (142) is provided,
the arrangement being such that mounting the circuit breaker on the mounting rail by engagement of the fixed formation (140) beneath the second lip (109b) of the mounting rail and rotation of the circuit breaker to bring the recess (104) over the mounting rail, the retractable formation (142) being cammed momentarily into a retracted position as it passes beneath the first lip (109a) of the mounting rail, causes the contact member (122) to pass into conductive engagement with the supply member (132).

2. An electricity supply assembly according to claim 1 wherein the retractable formation (142) is urged by a spring (143) into an operative position thereof and is retractable by engagement of a tail (144) of the circuit breaker.

3. An electricity supply assembly according to claim 1 or claim 2 wherein the retractable formation (142) is provided by spaced flanges.

4. An electricity supply assembly according to any preceding claim wherein the housing assembly is provided with at least one aperture (138) sufficiently small to prevent finger entry, through which the contact member (122) of the circuit breaker passes into conductive engagement with the supply assembly.

5. An electricity supply assembly according to any preceding claim wherein the contact member (122) of the circuit breaker comprises a flat contact surface lying in a plane which extends at right angles to a primary plane of the circuit breaker, and which engages face-to-face with the supply assembly.

6. An electricity assembly according to any preceding claim wherein the housing assembly comprises a housing (130) in which the supply member (132) is located and having a top surface spaced below the level of the lips (109a, 109b) of the mounting rail.

7. An electricity supply assembly according to any preceding claim comprising location means (154, 156) to enable the mounting-rail accurately to be positioned relative thereto.

8. An electricity supply assembly according to claim 8 wherein the location means (154, 156) enables the mounting-rail to be snap-fitted onto the housing assembly.

9. An electricity supply assembly according to any preceding claim comprising projections (160) on the housing assembly adapted to enter location recesses on the mounting-rail.

10. An electricity supply assembly according to any preceding claim wherein the housing assembly comprises location means to enable the supply member accurately to be positioned relative thereto.

11. An electricity supply assembly according to claim 11 wherein said location means enables the supply member to be snap-fitted onto the housing assembly.

## Patentansprüche

1. Stromversorgungsbaugruppe, welche umfasst:
a) eine Gehäusebaugruppe (130, 150);
b) ein lang gestrecktes Stromversorgungselement (132), das sich in einem Gehäuseteil (130) der Baugruppe befindet, wobei der Gehäuseteil mit einer oder mehreren Öffnungen versehen ist, die den Zugang zu dem Stromversorgungselement ermöglichen;
c) eine lang gestreckte Montageschiene (6, 106), die eine Grundplatte (7), parallele, nach oben gewandte Flansche (8), eine erste nach außen ragende Lippe (109a) auf einer Seite der Montageschiene, die dem Stromversorgungselement am nächsten ist, und eine zweite nach außen ragende Lippe (109b) auf einer Seite der Montageschiene, die von dem Stromversorgungselement am weitesten entfernt ist, wobei an diesen Lippen anliegend ein Leistungsschalter angebracht werden kann, aufweist;
d) einen Leistungsschalter (102) mit parallelen Seitenwänden, der in einer Unterseite desselben mit einer Aussparung (104) versehen ist, welche über den Lippen (109a, 109b) der Montageschiene angeordnet werden kann, wobei der Leistungsschalter ein festes Gebilde (140), das sich von einer Wand des Leistungsschalters aus in die Aussparung (104) auf einer Seite desselben hinein erstreckt, und ein zurückziehbares Gebilde (142), das von der anderen Seite desselben aus in die Aussparung (104) hineinragt, umfasst;
**dadurch gekennzeichnet, dass**
der Leistungsschalter mit einem Kontaktelement (122) versehen ist, das von der besagten Unterseite aus in einer Position, die einen Abstand von einer Seite der Aussparung (104) hat, auf der Seite derselben, auf welcher das zurückziehbare Gebilde (142) vorgesehen ist, hervorragt,
wobei die Anordnung so beschaffen ist, dass ein Anbringen des Leistungsschalters auf der Montageschiene durch Einrasten des festen Gebildes (140) unter der zweiten Lippe (109b) der Montageschiene und Drehung des Leistungsschalters, um die Aussparung (104) über die Montageschiene zu bringen, wobei das zurückziehbare Gebilde (142) vorübergehend durch Nockenwirkung in eine zurückgezogene Position gedrückt wird, während es sich unter der ersten Lippe (109a) der Montageschiene vorbeibewegt, bewirkt, dass das Kontaktelement (122) in einen elektrisch leitenden Eingriff mit dem Stromversorgungselement (132) gelangt.

2. Stromversorgungsbaugruppe nach Anspruch 1, wobei das zurückziehbare Gebilde (142) durch eine Feder (143) in eine Betriebsposition desselben gedrückt wird und durch Eingriff mit einem hinteren Fortsatz (144) des Leistungsschalters zurückziehbar ist.

3. Stromversorgungsbaugruppe nach Anspruch 1 oder Anspruch 2, wobei das zurückziehbare Gebilde (142) durch in einem Abstand voneinander angeordnete Flansche bereitgestellt wird.

4. Stromversorgungsbaugruppe nach einem der vorhergehenden Ansprüche, wobei die Gehäusebaugruppe mit wenigstens einer Öffnung (138) versehen ist, die genügend klein ist, um zu verhindern, dass ein Finger in sie gesteckt werden kann, und durch welche hindurch das Kontaktelement (122) des Leistungsschalters in einen elektrisch leitenden Eingriff mit der Stromversorgungsbaugruppe gelangt.

5. Stromversorgungsbaugruppe nach einem der vorhergehenden Ansprüche, wobei das Kontaktelement (122) des Leistungsschalters eine flache Kontaktfläche umfasst, die in einer Ebene liegt, welche sich unter rechten Winkeln zu einer primären Ebene des Leistungsschalters erstreckt, und welche Seite an Seite an der Stromversorgungsbaugruppe anliegt.

6. Stromversorgungsbaugruppe nach einem der vorhergehenden Ansprüche, wobei die Gehäusebaugruppe ein Gehäuse (130) umfasst, in welchem sich das Stromversorgungselement (132) befindet und welches eine Oberseite aufweist, die sich in einem Abstand unterhalb der Höhe der Lippen (109a, 109b) der Montageschiene befindet.

7. Stromversorgungsbaugruppe nach einem der vorhergehenden Ansprüche, welche Positionierungsmittel (154, 156) umfasst, um zu ermöglichen, dass die Montageschiene genau relativ zu ihr positioniert wird.

8. Stromversorgungsbaugruppe nach Anspruch 8, wobei die Positionierungsmittel (154, 156) ermöglichen, dass die Montageschiene auf die Gehäusebaugruppe aufgeschnappt wird.

9. Stromversorgungsbaugruppe nach einem der vorhergehenden Ansprüche, welche Vorsprünge (160) an der Gehäusebaugruppe umfasst, die dazu eingerichtet sind, in Positionierungsaussparungen an der Montageschiene einzugreifen.

10. Stromversorgungsbaugruppe nach einem der vorhergehenden Ansprüche, wobei die Gehäusebaugruppe Positionierungsmittel umfasst, um zu ermöglichen, dass das Stromversorgungselement genau relativ zu ihr positioniert wird.

11. Stromversorgungsbaugruppe nach Anspruch 10, wobei die besagten Positionierungsmittel ermöglichen, dass das Stromversorgungselement auf die Gehäusebaugruppe aufgeschnappt wird.

## Revendications

1. Ensemble d'alimentation en électricité comprenant :
a) un ensemble formant logement (130, 150) ;
b) un organe allongé d'alimentation en électricité (132) situé dans une partie de logement (130) de l'ensemble, la partie de logement étant pourvue d'une ou de plusieurs ouvertures donnant accès à l'organe d'alimentation ;
c) un rail de montage allongé (6, 106) comportant une base (7), des brides parallèles faisant face vers le haut (8), une première lèvre saillant vers l'extérieur (109a) d'un côté du rail de montage le plus proche de l'organe d'alimentation et une seconde lèvre saillant vers l'extérieur (109b) d'un côté du rail de montage le plus éloigné de l'organe d'alimentation, lèvres contre lesquelles un disjoncteur peut être disposé ;
d) un disjoncteur (102) à parois latérales parallèles et pourvu dans sa face inférieure d'une cavité (104) qui peut être disposée par-dessus les lèvres (109a, 109b) du rail de montage, le disjoncteur comprenant une structure fixe (140) s'étendant depuis une paroi du disjoncteur jusque dans la cavité (104) d'un côté de celle-ci, et une structure rétractable (142) saillant dans la cavité (104) depuis l'autre côté de celle-ci,
**caractérisé en ce que**
le disjoncteur est pourvu d'un organe de contact (122) saillant de ladite face inférieure en une position espacée par rapport à un côté de la cavité (104) du côté de celle-ci sur lequel la structure rétractable (142) est aménagée,
l'agencement étant tel que le montage du disjoncteur sur le rail de montage par engagement de la structure fixe (140) en dessous de la seconde lèvre (109b) du rail de montage et par rotation du disjoncteur pour amener la cavité (104) par-dessus le rail de montage, la structure rétractable (142) étant momentanément verrouillée dans une position rentrée quand elle passe en dessous de la première lèvre (109a) du rail de montage, amène l'organe de contact (122) à établir un engagement conducteur avec l'organe d'alimentation (132).

2. Ensemble d'alimentation en électricité selon la revendication 1 dans lequel la structure rétractable (142) est poussée par un ressort (143) dans une position de fonctionnement de celle-ci et est rétractable par accrochage d'une queue (144) du disjoncteur.

3. Ensemble d'alimentation en électricité selon la revendication 1 ou la revendication 2 dans lequel la structure rétractable (142) est procurée par des brides écartées.

4. Ensemble d'alimentation en électricité selon l'une quelconque des revendications précédentes dans lequel l'ensemble formant logement est pourvu d'au moins une ouverture (138) suffisamment petite pour empêcher d'y entrer un doigt, par laquelle l'organe de contact (122) du disjoncteur établit un engagement conducteur avec l'ensemble d'alimentation.

5. Ensemble d'alimentation en électricité selon l'une quelconque des revendications précédentes dans lequel l'organe de contact (122) du disjoncteur comprend une surface de contact plate située dans un plan qui s'étend à angles droits par rapport à un plan primaire du disjoncteur, et qui s'accouple en face à face avec l'ensemble d'alimentation.

6. Ensemble d'alimentation en électricité selon l'une quelconque des revendications précédentes dans lequel l'ensemble formant logement comprend un logement (130) dans lequel l'organe d'alimentation (132) est situé, et ayant une surface supérieure espacée sous le niveau des lèvres (109a, 109b) du rail de montage.

7. Ensemble d'alimentation en électricité selon l'une quelconque des revendications précédentes comprenant un moyen de centrage (154, 156) pour permettre de positionner le rail de montage avec précision par rapport à lui.

8. Ensemble d'alimentation en électricité selon la revendication 8 dans lequel le moyen de centrage (154, 156) permet d'encliqueter le rail de montage sur l'ensemble formant logement.

9. Ensemble d'alimentation en électricité selon l'une quelconque des revendications précédentes comprenant des saillies (160) sur l'ensemble formant logement adaptées pour pénétrer dans les cavités de centrage, sur le rail de montage.

10. Ensemble d'alimentation en électricité selon l'une quelconque des revendications précédentes dans lequel l'ensemble formant logement comprend un moyen de centrage pour permettre de positionner l'organe d'alimentation avec précision par rapport à lui.

11. Ensemble d'alimentation en électricité selon la revendication 10 dans lequel ledit moyen de centrage permet d'encliqueter l'organe d'alimentation sur l'ensemble formant logement.
